# EUROPEAN PATENT SPECIFICATION

(11) **EP 4 360 910 B1**
(45) Date of publication and mention of the grant of the patent: **10.12.2025**
(21) Application number: 22864016.5
(22) Date of filing: 22.06.2022
(51) Int. Cl.: B60C 11/03, B60C 11/12

(54) **TIRE**
REIFEN
PNEU

(30) Priority: 31.08.2021 JP 2021141832
(43) Date of publication of application: 01.05.2024
(73) Proprietor: BRIDGESTONE CORPORATION, Chuo-ku Tokyo 104-8340 (JP)
(72) Inventor: TANAKA, Yuta, Tokyo 104-8340 (JP)
(74) Representative: Marks & Clerk LLP
(86) International application number: PCT/JP2022/024943
(87) International publication number: WO 2023/032428

(56) References cited:
- EP-A1- 2 311 655
- EP-B1- 3 539 799
- CN-A- 102 079 223
- JP-A- 2005 161 967
- JP-A- 2014 509 980
- JP-A- 2020 203 500
- JP-A- 2020 203 503
- JP-A- H11 189 016
- US-A1- 2018 345 736
- US-A1- 2018 354 313

## Description

### TECHNICAL FIELD

This invention relates to a tire.

### BACKGROUND

Tires having sipes in which the width of the bottom portion thereof is widened have been disclosed (Patent Document 1).

### CITATION LIST

### Patent Literature

PTL 1: JP 2019/026018 A1

PTL 2: EP 2 311 655 A1 discloses a tread profile for a vehicle tyre wherein the profile has a set of narrow line or groove-shaped recesses formed in a radial direction with a radial inner extending region and a radial outer extending region. The recess is formed as a fine cut with a cutting width in the radial outer region and as a tubular opening channel with maximum opening width in the radial inner region, where the opening width is greater than or equal to two times of the cutting width. A set of parallel line-shaped radial projections are formed at a deep bottom that radially inwardly limits the opening channel.

PTL 3: JP 2020/203500 A discloses a pneumatic tire for improving drainage performance while suppressing occurrence of uneven wear during wear progress. The pneumatic tire comprises, on a tread part face, a plurality of circumferential main grooves extending in a tread circumferential direction and a plurality of land parts partitioned between the circumferential main grooves adjacent to each other in a tread width direction of the plurality of circumferential main grooves or by the circumferential main grooves and a tread end, where width directional grooves (width directional sipes)(circumferential sipes) have at groove bottom sides (sipe bottom sides) widened parts whose groove widths (sipe widths) become larger than a width of the tread part face side. Storage elastic modulus of a tread rubber in a region in a tire radial direction including at least a reference depth position is larger than storage elastic modulus of a tread rubber in a region closer to inside and outside in the tire radial direction than the region in the tire radial direction.

PTL 4: CN 102 079 223 A discloses a tire surface joint cutting for a heavy load tire for improving the durability and the drainage performance of the tire by improving the heating performance thereof. The joint-cutting is adopted by blocks. A lower end part of the joint cutting has a volume larger than that of an opening of the joint cutting. A horizontal wave-shaped opening of the joint cutting communicates with the lower end part of the joint cutting by a vertical waveform connection hole. A flow path pipe formed at the lower end part of the joint cutting consists of zigzag cylindrical tubes, wherein the blade rubber protrudes at an equal angle along the inner direction thereof and a plurality of cylindrical tubes are formed along the length direction of the flow path pipe.

PTL 5: EP 3 539 799 B1 discloses a tire with main kerfs and sub-kerfs, which aim to maintain drainage performance and running and braking performance by additionally including an auxiliary groove and improves a flow of air and drainage performance by including an auxiliary flow tube.

PTL 6: US 2018/345736 A1 discloses a tire comprising a tread. The tread comprises at least one channel, at least one wear indicator disposed on the bottom of the channel. The wear indicator comprises a contact face intended to come into contact with a road surface when the tire reaches a wear limit. The channel comprises a texture surrounding the wear indicator and contrasting with the contact face of the wear indicator.

PTL 7: US 2018/354313 A1 discloses a tire tread made of elastomeric material, having a tread surface intended to come into contact with a road surface when the tire rolls. The tread includes a plurality of cuts opening onto the tread surface, each cut having a sipe delimited by facing first walls, and a widening zone delimited by second walls widening the sipe in the depth of the tread, the roughness of the first walls being different from the roughness of the second walls of material.

### SUMMARY

### (Technical Problem)

According to the tire disclosed in Patent Document 1, it is expected to suppress the deterioration of drainage performance when tire wear has progressed. However, there is room for further improvement in the prior art with regard to drainage performance when tire wear has progressed.

Therefore, the purpose of the present invention is to provide a tire with sufficient drainage performance even when tire wear has progressed.

### (Solution to Problem)

The gist of the present invention is as follows.

A tire having at least one land portion defined, by at least one groove and tread edges, between the grooves or between the groove and the tread edge, on a tread surface of the tire, wherein
at least one of the land portions comprises at least one sipe extending in the tire circumferential direction or the tire width direction,
the sipe has:
   a narrow section extending continuously inward in the tire radial direction from the tread surface,
   a widened section on the inner side in the tire radial direction of the narrow section where the sipe width is larger than the narrow section,
   a plurality of bottom grooves at the bottom of the widened section extending in the extending direction of the sipe, and
   each of the sipes has 2 to 5 of the bottom grooves each length of which in the sipe depth direction is 0.5 to 1.0mm.

### (Advantageous Effect)

The present invention can provide a tire with sufficient drainage performance even when tire wear has progressed.

### BRIEF DESCRIPTION OF THE DRAWINGS

In the accompanying drawings:
FIG. 1 is a partially developed view of a tire according to the first embodiment of this invention, schematically illustrating the tread surface;
FIG. 2 is a cross-sectional view along the line A-A in FIG. 1;
FIG. 3 is a transparent perspective view to explain a sipe;
FIG. 4A illustrates another variation of the sipe;
FIG. 4B illustrates yet another variation of the sipe;
FIG. 4C illustrates yet another variation of the sipe; and
FIG. 5 is a partially developed view of a tire according to the second embodiment of this invention, schematically illustrating the tread surface.

### DETAILED DESCRIPTION

The tire of the present invention can be used for any type of tire, but can suitably be used for passenger car tires and bus or truck tires.

The following is illustrative descriptions of embodiments of the tire according to the present invention, with reference to the drawings. In each figure, common components are given the same reference numerals.

### [First embodiment]

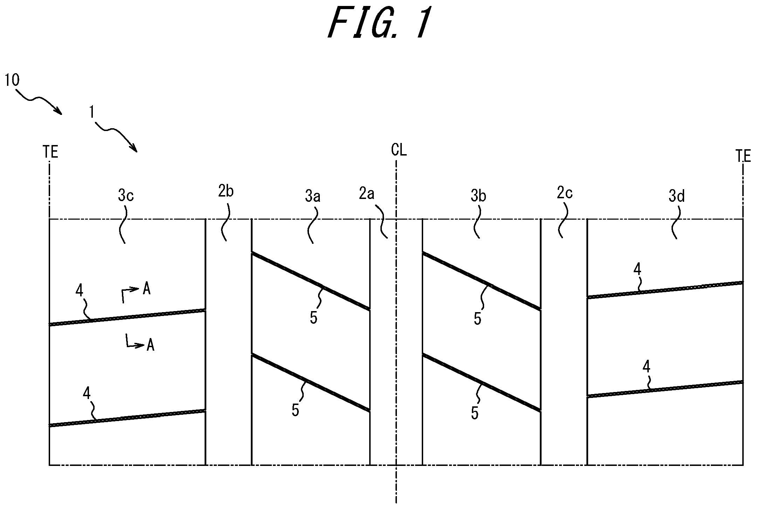

Figure 1 is a partially developed view of a tire 10 according to the first embodiment of this invention, schematically illustrating the tread surface 1.

As used herein, the term "tread surface (1)" means the outer circumferential surface of the tire that is in contact with the road surface when the tire is assembled on a rim, filled with prescribed internal pressure, and rolled under a maximum load.

In this document, the term "tread edge (TE)" means the outer edge of the tread surface (1) in the tire width direction.

As used herein, the term "rim" refers to the standard rim in the applicable size (Measuring Rim in ETRTO's STANDARDS MANUAL and Design Rim in TRA's YEAR BOOK) as described or as may be described in the future in the industrial standard, which is valid for the region in which the tire is produced and used, such as JATMA YEAR BOOK of JATMA (Japan Automobile Tyre Manufacturers Association) in Japan, STANDARDS MANUAL of ETRTO (The European Tyre and Rim Technical Organization) in Europe, and YEAR BOOK of TRA (The Tire and Rim Association, Inc.) in the United States (That is, the term "rim" includes current sizes as well as future sizes to be listed in the aforementioned industrial standards. An example of the "size as described in the future" could be the sizes listed as "FUTURE DEVELOPMENTS" in the ETRTO 2013 edition.). For sizes not listed in these industrial standards, the term "applicable rim" refers to a rim with a width corresponding to the bead width of the pneumatic tire.

Also, the term "prescribed internal pressure" refers to the air pressure (maximum air pressure) corresponding to the maximum load capacity of a single wheel in the applicable size and ply rating, as described in the aforementioned JATMA YEAR BOOK and other industrial standards. In the case that the size is not listed in the aforementioned industrial standards, the "prescribed internal pressure" refers to the air pressure (maximum air pressure) corresponding to the maximum load capacity specified for each vehicle in which the tire is mounted.

The term "maximum load" refers to the load corresponding to the above maximum load capacity.

The air here can be replaced by inert gas such as nitrogen gas or other inert gas.

In this document, unless otherwise noted, the dimensions of each element such as grooves and land portions, ground width (TW), etc., shall be measured in the "reference condition" described below.

As used herein, the term "reference condition" refers to the condition in which the tire is assembled on the rim, filled with the above prescribed internal pressure, and unloaded.

In this document, the term "sipes" shall mean the one that may or may not have a pair of opposing sipe walls that contact each other at least partially when the tire is mounted on the rim, filled with the prescribed internal pressure, and subjected to the maximum load, when the load is directly applied.

In this document, the term "sipe width" refers to the distance between a pair of opposing sipe walls, measured perpendicular to the extending direction of the sipe, and may be constant or variable in the tire radial direction. In addition, as used herein, the term "sipe depth" refers to the distance from the sipe opening position at the tread surface to the sipe bottom position in a cross-section along the sipe width direction.

In this document, the terms "groove" or "main groove" refer to the one that is configured so that when the tire is assembled on the rim, filled with the prescribed internal pressure, and subjected to a maximum load, a pair of opposing groove walls do not contact each other when the load is directly applied.

Note, that the term "shallow groove" herein do not correspond to the "groove" mentioned above.

In this document, the term "groove width" of a "groove" or "main groove" refers to the distance between a pair of opposing groove walls, measured perpendicular to the extending direction of the groove, and may be constant or variable in the tire radial direction. The term "groove depth" of a "groove" or "main groove" refers to the distance from the groove opening position at the tread surface to the groove bottom position in a cross-section along the groove width direction.

Also, in this document, the term "contact patch" means the outer surface of the tire that contacts the road surface when the tire is assembled on the rim, filled with the prescribed internal pressure, and grounded with the maximum load applied.

In the tire 10 of the first embodiment of this invention, at least one groove is provided on the tread surface 1. In this embodiment, three circumferential main grooves, 2a, 2b and 2c, extending in the tire circumferential direction are provided, but the number of circumferential main grooves is not limited. The grooves are not limited to those extending in the tire circumferential direction, and may also be grooves extending in the tire width direction (i.e., with a component in the tire width direction in a plan view).

On the tread surface 1, at least one land portion is defined between grooves or tread edges. In this embodiment, center land portions 3a and 3b are defined by the circumferential main groove 2a, which is disposed on the tire equatorial plane CL, and the circumferential main grooves 2b and 2c, which are disposed on the tread edge TE side than the circumferential main groove 2a. Also, shoulder land portions 3c and 3d are defined by the circumferential main grooves 2b and 2c, and both tread edges TE.

In the tire 10 of this embodiment, at least one (in this embodiment, four) sipes 4 are provided on at least one of the land portions, in this embodiment, on the shoulder land portions 3c and 3d. Note, that the land portions where the sipes 4 are provided is not limited.

The sipes 4 may extend in either the tire circumferential direction or the tire width direction, but in this embodiment, sipes are preferred to extend in the tire width direction.

Here, the term "extend in the tire width direction" shall include cases where the sipes 4 are parallel to the tire width direction and cases where the sipes 4 are inclined at a low angle to the tire width direction (e.g., at an angle of 45 degrees or less to the tire width direction). In addition, the sipes 4 may extend in a straight line in the tire width direction as illustrated in Figure 1, or they may extend in a zigzag or wavy pattern, etc. in the tire width direction.

In the example illustrated in Figure 1, the center land portions 3a and 3b located on the tire equatorial plane CL side are provided with sipes 5 extending in the tire width direction (inclined at a low angle to the tire width direction), but sipes extending in the tire circumferential direction can be provided as appropriate, or no sipes can be provided. Not limited to sipes, grooves extending in the tire width direction or grooves extending in the tire circumferential direction may also be provided.

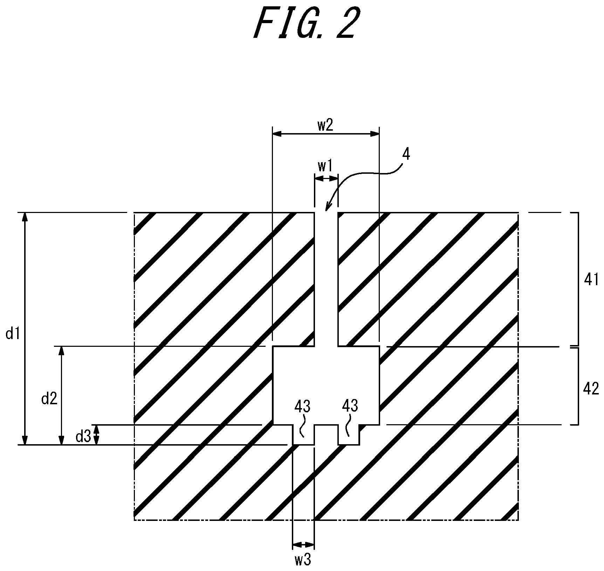

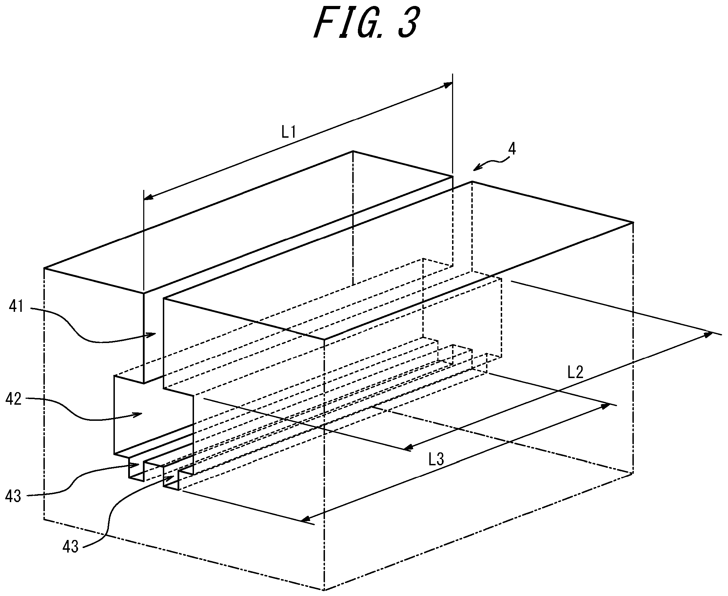

The sipes 4 in the tire 10 of the first embodiment are described in detail with reference to Figures 2 and 3. Figure 2 is a cross-sectional view along the line A-A in Figure 1, illustrating a cross-section of the sipe 4 in a plane perpendicular to the extending direction of the sipe 4. Figure 3 is a transparent perspective view to explain the sipe 4.

As illustrated in Figures 2 and 3, the sipe 4 has: a narrow section 41 extending continuously inward in the tire radial direction from the tread surface 1, a widened section 42 on the inner side in the tire radial direction of the narrow section 41 where the sipe width is larger than the narrow section 41, and a plurality (two in this embodiment) of bottom grooves 43 at the bottom of the widened section.

In Figure 2, the narrow section 41 extends inward in the tire radial direction in a straight line from the tread surface 1, but it may also extend in a zigzag, wavy, or other shape. Also, the sipe width w1 of the narrow section 41 is constant in the tire radial direction, but the sipe width may be configured to change midway in the tire radial direction.

The widened section 42 provided on the inner side in the tire radial direction of the narrow portion 41 has a sipe width w2 larger than the narrow portion 41. The widened section 42 is rectangular in a cross-sectional view, but its shape is not limited and can be oval, flask-shaped, etc. Also, the sipe width w2 of the widened section 42 is constant in the tire radial direction, but the sipe width may be configured to change midway in the tire radial direction.

In the tire 10 of this embodiment, a plurality (two in this embodiment) of bottom grooves 43 are provided at the bottom of the widened section 42, extending in the extending direction of the sipe 4. The bottom groove 43 is rectangular in a cross-sectional view, but its shape is not limited and can be oval, flask-shaped, etc.

In the prior art, a sipe with a widened section on the inner side in the tire radial direction from the tread surface can be formed by using a die (metal plate) with a widened section at the tip of a thin metal plate (blade) which are made by metal working. However, a sipe with an additional groove at the bottom of the widened section has not been considered in the past because it is extremely difficult to fabricate the mold (metal plate) for forming such a sipe by metal working. However, the inventor has newly noticed that by using, for example, a 3D printer to fabricate tire molds, it is possible to apply fine machining to a variety of grooves, and this invention was completed.

The following is an explanation of the effects of the tire configuration of the first embodiment. By having the widened section 42, the sipe 4 exposes the tread surface 1 with the widened section 42 having a large sipe width when tire wear has progressed, thereby improving drainage performance when tire wear has progressed compared to the case where the sipe width is constant over the tire radial direction, and sufficiently suppressing the deterioration of drainage performance even when tire wear has progressed. Furthermore, by providing a plurality of bottom grooves 43 at the bottom of the widened section 42, water drawn into the sipe 4 flows into the bottom grooves 43 and the water flow is regulated so that drainage from the sipe 4 is smooth, thus achieving sufficient drainage performance even when tire wear has progressed.

The following is a description of suitable configurations, variations, etc., of the tire according to the first embodiment.

In the tire 10 of the first embodiment, the groove widths of the circumferential main grooves 2a, 2b, and 2c are not particularly limited, but from the viewpoint of sufficient drainage, for example, the groove width is preferably more than 1.5 mm.

Also, the groove depths of the circumferential main grooves 2a, 2b, and 2c are not limited, but from the viewpoint of sufficient drainage performance and maintenance of tire rigidity, for example, it is preferable that the groove depth be 3 mm or more and 20 mm or less.

In the tire 10 of the first embodiment, the widened section 42 may be provided over the entire area of the sipe 4 in the extending direction of the sipe 4 on the tread surface 1, or may be provided in a part thereof. From the viewpoint of ensuring sufficient drainage performance, the length L2 of the widened section 42 along the extending direction of the sipe 4 is preferably at least 10% of the length L1 of the sipe 4 in the extending direction of the sipe 4 on the tread surface 1, and more preferably, at least 50%.

In the tire 10 of the first embodiment, the bottom groove 43 may be provided over the entire area of the widened section 42 in the extending direction of the widened section 42, or it may be provided in a part thereof. Also, as illustrated in Figure 3, the bottom groove 43 may extend continuously in the extending direction of the widened section 42, or it may be divided into multiple sections and extend intermittently in the extending direction of the widened section 42. From the viewpoint of effectively regulating the flow of water captured inside the sipe 4, the length L3 of the bottom groove 43 along the extending direction of the sipe 4 is preferably at least 10% of the extending length L1 of the sipe 4 at the tread portion 1, and more preferably, the bottom groove 43 extends continuously throughout the entire area in the extending direction of the widened section 42.

In the tire of the first embodiment, the bottom groove 43 preferably extends along the extending direction of the sipe 4, but it may extend at a low angle to the extending direction of the sipe 4 within the bottom of widened section 42, or it may extend in a zigzag or wavy or other shape. Here, "along the extending direction of the sipe 4" means extending at 0° along the extending direction of the sipe 4.

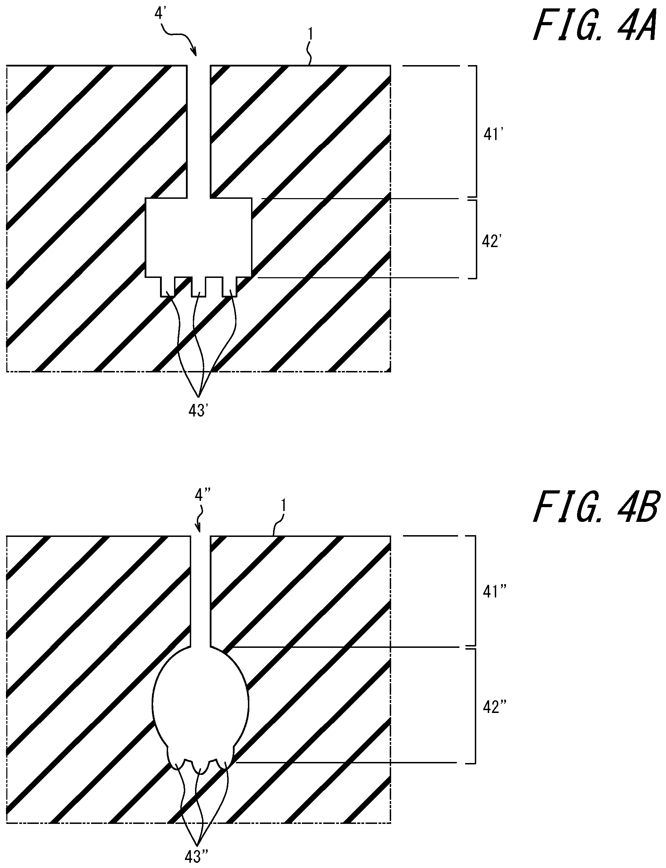

Figure 4A illustrates another variation of the sipe 4, a cross-section of sipe 4' in a plane perpendicular to the extending direction of the sipe 4'. Figure 4B illustrates yet another variation of the sipe 4, a cross-section of sipe 4" in a plane perpendicular to the extending direction of the sipe 4".

The shape of the widened section 42 and the bottom groove 43 of the sipe 4 is not limited to that illustrated in Figure 2, as described above. For example, the bottom of the widened section 42', which is rectangular in a cross-sectional view, illustrated in Figure 4A, may be shaped to have three or more (three in Figure 4A) bottom grooves 43', which are rectangular in a cross-sectional view. Also, the bottom of the widened section 42", which is elliptical in a cross-sectional view, illustrated in Figure 4B, may be shaped to have a plurality (three in Figure 4B) of bottom grooves 43'', which are semi-elliptical in a cross-sectional view at the bottom of the widened section 42".

In the tire 10 of the first embodiment, the sipe 4 preferably have two or more bottom grooves 43. By having two or more bottom grooves 43 at the bottom of the widened section 42, each sipe 4 can more effectively ensure sufficient drainage performance when tire wear has progressed, because the flow of water captured inside the sipe 4 is regulated, allowing for smoother drainage from the sipe 4. The sipe 4 preferably has five or less of the bottom grooves 43 to effectively regulate the flow of water taken up inside the sipe 4 without impairing the drainage performance of the widened section 42 when tire wear has progressed. More suitably, the sipe 4 has three to five of the bottom grooves 43 from the viewpoint of ensuring sufficient drainage performance when tire wear has progressed.

In the tire 10 of the first embodiment, the sipe width w1 of the narrow section 41 is preferably less than 1.5 mm in the reference condition, and from the viewpoint of ensuring sufficient drainage performance of the sipe 4, it is suitable to be at 0.2 mm or more.

The sipe width w2 of the widened section 42 is not limited as long as it is larger than the sipe width w1 of the narrow section 41. To achieve sufficient drainage performance when tire wear has progressed, it is preferable to set the sipe width w2 to 1.5 mm or more, and to maintain sufficient rigidity of the land portion where the sipe 4 is provided, it is preferable to set the sipe width w2 to 8 mm or less.

In addition, the width w3 of the bottom groove 43 is not limited as long as it is smaller than the widened section 42. From the perspective of effectively regulating the flow of water flowing into the sipe 4, for example, it can be as wide as the narrow section 41.

In the tire 10 of this embodiment, the total sipe depth d1 of the entire sipe 4, in other words, the total length in the depth direction of the sipe 4 of: the narrow section 41, the widened section 42, and the bottom groove 43, is not particularly limited. However, it is preferably as deep as the circumferential main grooves 2b and 2c through which the sipe is connected.

This configuration effectively ensures sufficient drainage performance when tire wear has progressed.

More specifically, the sipe depth d1 of the entire sipe 4 is preferably 3 mm or more from the viewpoint of sufficient drainage performance and 20 mm or less from the viewpoint of maintaining the rigidity of the land portion where the sipe 4 is provided. More suitably, it is 5 mm or more and 8 mm or less in this embodiment.

In the tire 10 of this embodiment, the length d2, which is the total length in the sipe depth direction of: the widened section 42 and the bottom groove 43, is preferably 10% or more of the sipe depth d1. By setting the length d2 to 10% of the sipe depth d1, sufficient drainage performance when tire wear has progressed can be effectively ensured. From the viewpoint of maintaining the rigidity of the land portion where the sipe 4 is provided, the length d2 is preferably 60% or less of the sipe depth d1. More suitably, the length d2 is preferably 20 to 50% of the sipe depth d1 in order to both ensure sufficient drainage performance when tire wear has progressed and maintain the rigidity of the land portion.

More specifically, the length d2, which is the total length in the sipe depth direction of: the widened section 42 and the bottom groove 43, is preferably 1.6 mm or more. By setting the length d2 to 1.6 mm or more, sufficient drainage performance when tire wear has progressed can be effectively ensured. The length d2 is preferably 12 mm or less from the viewpoint of maintaining the rigidity of the land portion where the sipe 4 is provided. More suitably, the length d2 is preferably 2.0 mm to 10 mm to ensure both sufficient drainage performance when tire wear has progressed and to maintain the rigidity of the land portion.

In the tire 10 of this embodiment, the length d3 in the sipe depth direction of the bottom groove 43 is preferably 0.05 times or more than the sipe depth d1. By setting the length d3 of the bottom groove 43 to 0.1 times or more the sipe depth d1, the flow of water captured inside the sipe 4 is regulated and drainage from the sipe 4 is made smoother, thus more effectively ensuring sufficient drainage performance when tire wear has progressed. In addition, the length d3 of the bottom groove 43 is preferably 0.5 times or less than the sipe depth d1, in order to effectively regulate the flow of water taken up inside the sipe 4 without impairing the drainage performance of the widened section 42 when tire wear has progressed. More suitably, the length d3 of the bottom groove 43 is 0.1 to 0.2 times the sipe depth d1 from the viewpoint of ensuring sufficient drainage performance when tire wear has progressed.

In the tire 10 of this embodiment, the length d3 in the sipe depth direction of the bottom groove 43 is suitably 1/2 or less of the length d2, which is the total length in the sipe depth direction of the widened section 42 and the bottom groove 43.

According to this configuration, sufficient drainage performance can be maintained by the widened section 42, which is the widest in the sipe 4, when tire wear has progressed, and the decrease in drainage performance when tire wear has progressed can be suppressed more effectively over the long term.

More specifically, the length d3 of the bottom groove 43 in the sipe depth direction is 0.5 mm or more. By setting the length d3 to 0.5 mm or more, the flow of water taken up inside the sipe 4 is regulated and drainage from the sipe 4 can be performed more smoothly, more effectively ensuring sufficient drainage performance when tire wear has progressed. Also, the length d3 is 1.0 mm or less in order to effectively regulate the flow of water taken up inside the sipe 4 without impairing the drainage performance of the widened section 42 when tire wear has progressed. More suitably, in an embodiment of the invention, the length d3 of the bottom groove 43 may be 0.6 to 0.8 mm from the viewpoint of ensuring sufficient drainage performance when tire wear has progressed.

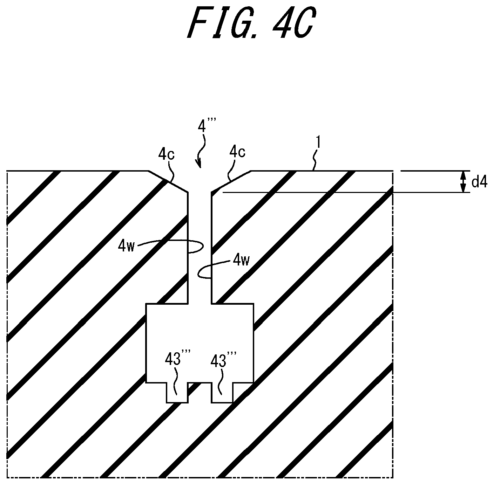

Figure 4c illustrates yet another variation of sipe 4, a cross-section of sipe 4‴ in a plane perpendicular to the extending direction of the sipe 4‴. The sipe 4‴, which is a part or all of the sipes 4 on the tread surface 1, may include a pair of sipe walls 4w facing each other with a chamfer 4c at its edge of the tread surface 1, as illustrated in Figure 4c.

The above configuration further ensures sufficient drainage performance by the sipe 4.

The depth d4 of the chamfer 4c is not limited, but can be 3 to 4 mm, for example.

In the example illustrated in Figure 4C, two bottom grooves 43‴ are provided, but the number of bottom grooves 43‴ in the sipe 4 with chamfer 4c is not limited as long as there are several.

In the tire 10 of this embodiment, the number of sipes 4 disposed on the tread surface1 is not particularly limited, but from the viewpoint of ensuring sufficient drainage performance, it is suitable that the number of sipes in the contact patch is at least one or more.

Here, in the term "number of sipes in the contact patch", if any part of sipe 4 is located in the contact patch, it is considered to be located in the contact patch.

In addition, in the tread surface 1, sipes 4 with widened sections 42 and bottom grooves 43 and sipes without widened sections and bottom grooves can be alternately arranged in the tire circumferential direction. According to this configuration, the number of sipes can be increased to effectively ensure drainage performance while maintaining the rigidity of the land portion where the sipes are provided.

The tire 10 of the first embodiment can be any type of tire, but it is suitable to be a passenger vehicle tire. In this embodiment, the tire 10 is provided with sipes 4 extending in the tire width direction in the shoulder land portions 3c and 3d, which are divided by the circumferential main grooves 2b and 2c and both tread edges TE. According to this configuration, drainage from the tire equatorial plane CL side to the tread edge TE side is more effectively promoted during load rolling of the tire, effectively ensuring sufficient drainage performance of the passenger car tire during wear progression.

### [Second embodiment]

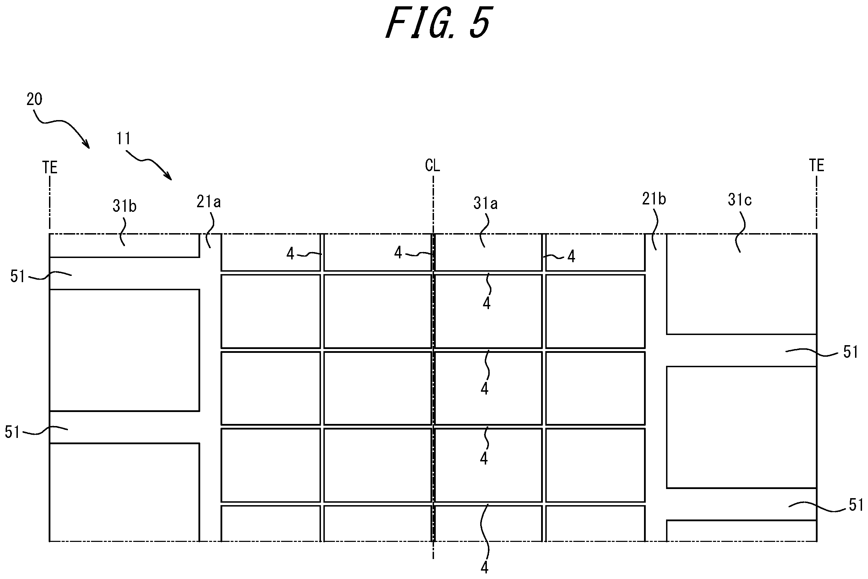

Next, the tire of the other embodiment of this invention (the second embodiment) is described with reference to Figure 5. The tire 20 of the second embodiment has the same configuration as the tire of the first embodiment, except that the pattern of the tread surface 11 and the arrangement of the sipes 4 are different. Components similar to those in the first embodiment are given the same reference numerals and their descriptions will be omitted.

Figure 5 is a partially developed view of the tire 20 of the second embodiment of this invention, schematically illustrating the tread surface 11.

In the tire 20 of the second embodiment of this invention, at least one groove is provided on the tread surface 11. In this embodiment, two circumferential main grooves 21a and 21b extending in the tire circumferential direction are provided, but the number of circumferential main grooves is not limited. Also, the grooves are not limited to grooves extending in the tire circumferential direction, and may also be grooves extending in the tire width direction (i.e., with a component in the tire width direction in a plan view).

At least one land portion is defined on the tread surface 11 between grooves or between tread edges. In this embodiment, a center land portion 31a is defined by the circumferential main grooves 21a and 21b, and shoulder land portions 31b and 31c are defined by the circumferential main grooves 21a and 21b, and both tread edges TE.

In the tire 20 of this embodiment, at least one sipe 4 is provided in the center land portion 31a and/or shoulder land portions 31b and 31c. That is, in this tire 20, at least one sipe 4 is provided in all of the center land portion 31a and the shoulder land portions 31b and 31c, or in one or more of the center land portion 31a and the shoulder land portions 31b and 31c. In Figure 5, a plurality of sipes 4 are provided in the center land portion 31a, but the land portion where the sipe 4 is provided is not limited.

In Figure 5, sipes 4 extending in the tire circumferential direction and sipes 4 extending in the tire width direction are provided in the center land portion 31a, but the sipes 4 may extend in either the tire circumferential direction or the tire width direction. In this embodiment, it is suitable for the sipes to extend in the tire circumferential direction.

Here, the term "extending in the tire circumferential direction" shall include cases where the sipe 4 is parallel to the tire circumferential direction or where the sipe 4 is inclined at a low angle with respect to the tire circumferential direction (e.g., the angle of inclination with respect to the tire circumferential direction is 45 degrees or less). The sipe 4 may extend in a straight line in the tire circumferential direction as illustrated in Figure 5, or it may extend in the tire circumferential direction in a zigzag or wavy shape or the like.

In the example illustrated in Figure 5, the shoulder land portions 31b and 31c are provided with width direction grooves 51 extending in the tire width direction, but they may not have width direction grooves. Also, the center land portion 31a is provided with width direction sipes 4 extending in the tire width direction, but it may not have width direction sipes,

According to the tire 20 of the second embodiment, sufficient drainage performance can be achieved even when tire wear has progressed.

In the tire 20 of the second embodiment, as in the tire 10 of the first embodiment, the sipe depth d1 of the entire sipe 4 is preferably 3 mm or more from the viewpoint of sufficient drainage performance, and from the viewpoint of maintaining the rigidity of the land portion where the sipe 4 is provided, it is suitable to be 20 mm or less. More suitably, it is 15 mm or more and 18 mm or less in this embodiment.

In the tire 20 of this embodiment, the length d3 of the bottom groove 43 in the sipe depth direction is preferably at least 0.05 times the sipe depth d1. By setting the length d3 of the bottom groove 43 at least 0.1 times the sipe depth d1, the flow of water taken up inside the sipe 4 is regulated and drainage from the sipe 4 can be performed more smoothly, more effectively ensuring sufficient drainage performance during wear progression. Also, the length d3 of the bottom groove 43 is preferably 0.5 times or less than the sipe depth d1 in order to effectively regulate the flow of water taken up inside the sipe 4 without impairing the drainage performance of the widened section 42 when tire wear has progressed. More suitably, the length d3 of the bottom groove 43 is 0.05 to 0.1 times the sipe depth d1 from the viewpoint of ensuring sufficient drainage performance when tire wear has progressed.

The tire 20 of the second embodiment can be any type of tire, but it is suitable to be a bus or truck tire.

In this embodiment, the tire 20 is provided with the sipes 4 extending in the tire circumferential direction in all of the center land portion 31a, the shoulder land portion 31b, and the shoulder land portion 31c, or in one or more of land portions of the center land portion 31a, the shoulder land portion 31b, and the shoulder land portion 31b.

In bus or truck tires, it is important to ensure drainage performance while maintaining the rigidity of the land portion because a high load is applied depending on the loading capacity of the vehicle. By providing the sipes 4 extending in the tire circumferential direction, sufficient drainage performance during wear progression can be effectively ensured while maintaining the rigidity of the land potion in the width direction.

In this embodiment, the tire 20 is provided with sipes 4 extending in the tire circumferential direction in the center land portion 31a, which is defined by the circumferential main grooves 21a and 21b. Since the center land portion 31a is located at the tire equatorial plane CL side in the tire width direction, the ground contact pressure in the tire width direction tends to be higher relative to the tread edge TE side when the tire is driven straight, and the ground contact pressure is particularly likely to be higher in heavy-load tires such as bus or truck tires. By providing the sipes 4 extending in the tire circumferential direction in such a center region, it is possible to effectively ensure sufficient drainage performance of bus or truck tires during wear progression.

### INDUSTRIAL APPLICABILITY

The tires of the present invention can be used for any type of tire, but can suitably be used for passenger vehicle tires and bus or truck tires.

### REFERENCE SIGNS LIST

1, 11 Tread surface
2a, 2b, 2c, 21a, 21b Circumferential main groove
3a, 3b, 31a Center land portion
3c, 3d, 31b, 31c Shoulder land portion
4, 4', 4", 4" Sipe
5 Sipe
10, 20 Tire
41, 41", 41" Narrow section,
42, 42", 42" Widened section
43, 43", 43" Bottom groove
51 Width direction groove
TE Tread edge
CL Tire equatorial plane

## Claims

1. A tire (10, 20) having at least one land portion (3a, 3b, 3c, 3d, 31a, 31b, 31c) defined, by at least one groove (2a, 2b, 2c, 21a, 21b) and tread edges (TE), between the grooves (2a, 2b, 2c, 21a, 21b) or between the groove (2b, 2c, 21a, 21b) and the tread edge (TE), on a tread surface (1, 11) of the tire (10, 20), wherein
at least one of the land portions (3c, 3d, 31a) comprises at least one sipe (4) extending in the tire circumferential direction or the tire width direction,
the sipe (4) has:
a narrow section (41) extending continuously inward in the tire radial direction from the tread surface (1, 11),
a widened section (42) on the inner side in the tire radial direction of the narrow section (41) where the sipe width is larger than the narrow section (41),
a plurality of bottom grooves (43) at the bottom of the widened section (42) extending in the extending direction of the sipe (4), and
each of the sipes (4) has 2 to 5 of the bottom grooves (43) each length of which in the sipe depth direction is 0.5 to 1.0mm.

2. The tire (10, 20) according to claim 1, wherein the length of the bottom groove (43) in the sipe depth direction is 1/2 or less of the total length of the widened section (42) and the bottom groove (43) in the sipe depth direction.

3. The tire (10, 20) according to any one of claims 1 or 2, wherein
the tire (10, 20) is a passenger vehicle tire,
the tread surface (1, 11) has a circumferential main groove (2, 21a, 21b) extending in the tire circumferential direction, and shoulder land portions (3c, 3d, 31b, 31c) defined by the circumferential main groove (2, 21a, 21b) and the tread edges (TE), and
the sipe (4) is provided in the shoulder land portions (3c, 3d, 31b, 31c) and extends in the tire width direction.

4. The tire (10, 20) according to any one of claims 1 or 2, wherein
the tire (10 ,20) is a bus or truck tire,
the tread surface (1, 11) has at least two circumferential main grooves (2, 21a, 21b) extending in the tire circumferential direction, a center land portion (3a, 3b, 31a) defined by the two circumferential main grooves (2, 21a, 21b), and shoulder land portions (3c, 3d, 31b, 31c) defined by the two circumferential main grooves (2, 21a, 21b) and the tread edges (TE),
the sipe (4) is provided in the center land portion (3a, 3b, 31a) and/or the shoulder land portions (3c, 3d, 31b, 31c) and extends in the tire circumferential direction.

## Patentansprüche

1. Reifen (10, 20), der mindestens einen Stegabschnitt (3a, 3b, 3c, 3d, 31a, 31b, 31c) aufweist, der durch mindestens eine Rille (2a, 2b, 2c, 21a, 21b) und Laufflächenkanten (TE) zwischen den Rillen (2a, 2b, 2c, 21a, 21b) oder zwischen der Rille (2b, 2c, 21a, 21b) und der Laufflächenkante (TE) auf einer Laufflächenoberfläche (1, 11) des Reifens (10, 20) definiert ist, wobei
mindestens einer der Stegabschnitte (3c, 3d, 31a) mindestens eine Lamelle (4) umfasst, die sich in der Reifenumfangsrichtung oder der Reifenbreitenrichtung erstreckt,
die Lamelle (4) aufweist:
einen schmalen Abschnitt (41), der sich von der Laufflächenoberfläche (1, 11) kontinuierlich in der Reifenradialrichtung nach innen erstreckt,
einen verbreiterten Abschnitt (42) auf der Innenseite in der Reifenradialrichtung des schmalen Abschnitts (41), wo die Lamellenbreite größer ist als der schmale Abschnitt (41),
eine Vielzahl von Bodenrillen (43) am Boden des verbreiterten Abschnitts (42), die sich in Erstreckungsrichtung der Lamelle (4) erstreckt, und
jede der Lamellen (4) 2 bis 5 der Bodenrillen (43) aufweist, wobei jede Länge davon in der Lamellentiefenrichtung jeweils 0,5 bis 1,0mm beträgt.

2. Reifen (10, 20) nach Anspruch 1, wobei die Länge der Bodenrille (43) in der Lamellentiefenrichtung 1/2 oder weniger der Gesamtlänge des verbreiterten Abschnitts (42) und der Bodenrille (43) in der Lamellentiefenrichtung beträgt.

3. Reifen (10, 20) nach einem der Ansprüche 1 oder 2, wobei
der Reifen (10, 20) ein Pkw-Reifen ist,
die Laufflächenoberfläche (1, 11) eine sich in der Reifenumfangsrichtung erstreckende Hauptumfangsrille (2, 21a, 21b) und Schulterstegabschnitte (3c, 3d, 31b, 31c) aufweist, die durch die Hauptumfangsrille (2, 21a, 21b) und die Laufflächenkanten (TE) definiert sind, und
die Lamelle (4) in den Schulterstegabschnitten (3c, 3d, 31b, 31c) bereitgestellt ist und sich in der Reifenbreitenrichtung erstreckt.

4. Reifen (10, 20) nach einem der Ansprüche 1 oder 2, wobei
der Reifen (10, 20) ein Bus- oder LKW-Reifen ist,
die Laufflächenoberfläche (1, 11) mindestens zwei sich in der Reifenumfangsrichtung erstreckende Hauptumfangsrillen (2, 21a, 21b), einen durch die beiden Hauptumfangsrillen (2, 21a, 21b) definierten mittleren Stegabschnitt (3a, 3b, 31a) und Schulterstegabschnitte (3c, 3d, 31b, 31c) aufweist, die durch die beiden Hauptumfangsrillen (2, 21a, 21b) und die Laufflächenkanten (TE) definiert sind,
die Lamelle (4) im mittleren Stegabschnitt (3a, 3b, 31a) und/oder den Schulterstegabschnitten (3c, 3d, 31b, 31c) bereitgestellt ist und sich in der Reifenumfangsrichtung erstreckt.

## Revendications

1. Pneu (10, 20) comportant au moins une partie d'appui (3a, 3b, 3c, 3d, 31a, 31b, 31c) définie par au moins une rainure (2a, 2b, 2c, 21a, 21b) et des bords de bande de roulement (TE), entre les rainures (2a, 2b, 2c, 21a, 21b) ou entre la rainure (2b, 2c, 21a, 21b) et le bord de bande de roulement (TE), sur une surface de bande de roulement (1, 11) du pneu (10, 20), dans lequel
au moins une des parties d'appui (3c, 3d, 31a) comprend au moins une lamelle (4) s'étendant dans le sens circonférentiel du pneu ou dans le sens de la largeur du pneu,
la lamelle (4) présente :
une section étroite (41) s'étendant continuellement vers l'intérieur dans le sens radial du pneu à partir de la surface de bande de roulement (1, 11),
une section élargie (42) sur le côté interne dans le sens radial du pneu de la section étroite (41), dans lequel la largeur de la lamelle est plus grande que la section étroite (41),
une pluralité de rainures inférieures (43) au bas de la section élargie (42) s'étendant dans le sens d'extension de la lamelle (4), et
chacune des lamelles (4) présente 2 à 5 des rainures inférieures (43) dont chaque longueur dans le sens de la profondeur de la lamelle fait 0,5 à 1,0 mm.

2. Pneu (10, 20) selon la revendication 1, dans lequel la longueur de la rainure inférieure (43) dans le sens de la profondeur de la lamelle est 1/2 ou moins de la longueur totale de la section élargie (42) et de la rainure inférieure (43) dans le sens de la profondeur de la lamelle.

3. Pneu (10, 20) selon l'une quelconque des revendications 1 et 2, dans lequel
le pneu (10, 20) est un pneu de véhicule de tourisme,
la surface de bande de roulement (1, 11) présente une rainure principale circonférentielle (2, 21a, 21b) s'étendant dans le sens circonférentiel du pneu, et des parties d'appui d'épaulement (3c, 3d, 31b, 31c) définies par la rainure principale circonférentielle (2, 21a, 21b) et les bords de bande de roulement (TE), et
la lamelle (4) est prévue dans les parties d'appui d'épaulement (3c, 3d, 31b, 31c) et s'étend dans le sens de la largeur du pneu.

4. Pneu (10, 20) selon l'une quelconque des revendications 1 ou 2, dans lequel
le pneu (10, 20) est un pneu de bus ou de camion,
la surface de bande de roulement (1, 11) présente au moins deux rainures principales circonférentielles (2, 21a, 21b) s'étendant dans le sens circonférentiel du pneu, une partie d'appui centrale (3a, 3b, 31a) définie par les deux rainures principales circonférentielles (2, 21a, 21b), et des parties d'appui d'épaulement (3c, 3d, 31b, 31c) définies par les deux rainures principales circonférentielles (2, 21a, 21b) et les bords de bande de roulement (TE),
la lamelle (4) est prévue dans la partie d'appui centrale (3a, 3b, 31a) et/ou dans les parties d'appui d'épaulement (3c, 3d, 31b, 31c) et s'étend dans le sens circonférentiel du pneu.
